(19) Europäisches Patentamt

European Patent Office

Office européen des brevets

(11) **EP 1 408 335 A2**

(12) **EUROPÄISCHE PATENTANMELDUNG**

(43) Veröffentlichungstag:
**14.04.2004 Patentblatt 2004/16**

(51) Int Cl.[7]: **G01P 3/80**, G06T 7/20,
B65G 47/70

(21) Anmeldenummer: 03022888.6

(22) Anmeldetag: **08.10.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **08.10.2002 DE 10246896**

(71) Anmelder: **SIEMENS AKTIENGESELLSCHAFT**
**80333 München (DE)**

(72) Erfinder: **Beil, Oliver**
**76344 Eggenstein-Leopoldshafen (DE)**

(54) **Verfahren und Anordnung zur Bestimmung der Vorschubgeschwindigkeit eines Objektes**

(57) Es wird ein Verfahren zur Bestimmung der Vorschubgeschwindigkeit (V) eines Objekts (11) vorgeschlagen, wobei von dem Objekt (11) mittels eines Bildaufnahmeelements (1) zu einem bestimmten Zeitpunkt und in einem vorbestimmten zeitlichen Abstand (dt) nach dem Zeitpunkt, in dem es eine Strecke (dx) zurückgelegt hat, Bildaufnahmen gemacht werden. Durch geeignete Maßnahmen wird eine genaue Bestimmung der Vorschubgeschwindigkeit ermöglicht.

Darüber hinaus wird eine Anordnung mit einem Bildaufnahmeelement (1) vorgeschlagen, welche eine genaue Bestimmung der Vorschubgeschwindigkeit (V) des Objektes (11) ermöglicht.

FIG 1

EP 1 408 335 A2

**Beschreibung**

Die Erfindung betrifft ein Verfahren zur Bestimmung der Vorschubgeschwindigkeit eines Objektes, bei welchem das Objekt mittels eines Bildaufnahmeelements zu einem Zeitpunkt und in einem vorbestimmten zeitlichen Abstand, in dem es eine Strecke zurückgelegt hat, erfasst wird. Ferner betrifft die Erfindung eine Anordnung mit einem Bildaufnahmeelement, mittels welchem ein Bild des Objektes rasterförmig erfassbar ist.

Bei einer automatischen Fertigung ist es häufig erforderlich, die Vorschubgeschwindigkeit eines sich auf einem Transportband befindlichen Objektes genau zu bestimmen. So ist es beispielsweise insbesondere dann erforderlich, die Vorschubgeschwindigkeit eines Objektes genau zu bestimmen, wenn es für die Weiterbehandlung des Objektes darauf ankommt, die genaue Position des Objektes zu kennen. Dies ist beispielsweise dann erforderlich, wenn das Objekt mittels eines Auswerfers vom Transportband entfernt werden soll. Denn erst, wenn die genaue Vorschubgeschwindigkeit des Objektes bekannt wird, lässt sich mit genügender Genauigkeit bestimmen, zu welchem Zeitpunkt sich das Objekt vor dem Auswerfer befindet und der Auswerfer betätigt werden kann.

Es ist Aufgabe der Erfindung, ein Verfahren bzw. eine Anordnung zur genauen Bestimmung der Geschwindigkeit eines Objektes anzugeben.

Die Lösung dieser Aufgabe ergibt sich aus den Merkmalen des kennzeichnenden Teils des Anspruchs 1 oder 7. Vorteilhafte Weiterbildungen der Erfindung ergeben sich aus den Unteransprüchen.

Gemäß der Erfindung werden bei einem Verfahren zur Bestimmung der Vorschubgeschwindigkeit eines Objekts, bei welchem von dem Objekt mittels eines Bildaufnahmeelements zu einem bestimmten Zeitpunkt und in einem vorbestimmten zeitlichen Abstand nach dem Zeitpunkt, in dem es eine Strecke zurückgelegt hat, Bildaufnahmen gemacht, von den Aufnahmen jeweils ein Bildprofil erstellt, von den Bildprofilen eine Funktion des Korrelationskoeffizienten in Abhängigkeit einer unabhängigen Variablen gebildet, der maximale Korrelationskoeffizient als auch der zugehörige Messwert der unabhängigen Variablen bestimmt und ein statistischer Schätzwert der unabhängigen Variablen gebildet, wobei aus dem Messwert in Abhängigkeit eines ersten Wichtungsfaktors sowie dem Schätzwert in Abhängigkeit eines zweiten Wichtungsfaktors ein verbesserter zugehöriger Wert der unabhängigen Variablen bestimmt wird und durch Division des verbesserten zugehörigen Wertes der unabhängigen Variablen durch den zeitlichen Abstand der Bildaufnahmen die Vorschubgeschwindigkeit bestimmt wird.

Dadurch, dass das Objekt mittels eines Bildaufnahmeelements rasterförmig erfassbar ist, lässt sich von einem erfassten Bild in vorteilhafter Weise ein so genanntes Bildprofil erstellen. Zur Erstellung des Bildprofils wird das erfasste Bild zunächst in Schwarz-/Weißwerte aufgeteilt und die Summe der schwarzen Bildpunkte in einer Richtung über die Länge bzw. den Weg des Objektes dargestellt. Hierdurch ergibt sich ein Summenprofil der schwarzen Bildpunkte eines aufgenommenen Bildes.

Derartige Bildprofile lassen sich sehr gut auswerten. Insbesondere lässt sich von zwei derartigen Bildprofilen auf einfache und in zuverlässiger Weise ein Korrelationskoeffizient in Abhängigkeit einer unabhängigen Variablen bilden, wie dies in erfindungsgemäßer Weise mit zwei von in einem vorbestimmten zeitlichen Abstand erfassten Bildern gebildeten Bildprofilen geschieht.

Da der Korrelationskoeffizient an der Stelle der unabhängigen Variablen sein Maximum hat, die der von dem Objekt in dem vorbestimmten zeitlichen Abstand zurückgelegten Strecke entspricht, lässt sich durch Division des zum maximalen Wert des Korrelationskoeffizienten zugehörigen Wertes der unabhängigen Variablen durch den vorbestimmten zeitlichen Abstand der Bildaufnahmen die Vorschubgeschwindigkeit des Objektes bestimmen.

Eine derartige Bestimmung der Vorschubgeschwindigkeit des Objektes hat sehr große Vorteile, da sie berührungslos erfolgt und im Wesentlichen mittels digitaler Rechner durchgeführt werden kann. Dennoch haftet ihr wie auch anderen Methoden zur Bestimmung des Vorschubs der Nachteil an, dass sie störanfällig ist. So wirkt sich insbesondere ein nicht gleichförmiger Verlauf des Transportbandes zur Zeit der Bildaufnahmen sehr nachteilig auf die Genauigkeit der Bestimmung der Vorschubgeschwindigkeit aus. Auch können sich während der Bildaufnahmen ändernde Lichtverhältnisse nachteilige Auswirkungen haben.

Um diese Nachteile zu vermeiden, wird in erfindungsgemäßer Weise von den zu den jeweiligen maximalen Korrelationskoeffizienten zugehörigen Werten der unabhängigen Variablen ein statistischer Schätzwert gebildet. Aus dem jeweiligen Messwert der unabhängigen Variablen und dem Schätzwert der unabhängigen Variablen wird dann in Abhängigkeit eines jeweils zugehörigen Wichtungsfaktors ein verbesserter zugehöriger Wert der unabhängigen Variablen bestimmt.

Dadurch, dass von den zu einem jeweiligen maximalen Korrelationskoeffizienten zugehörigen Werten der unabhängigen Variablen ein statistischer Schätzwert gebildet wird, der bei der Ermittlung eines zur Berechnung der Vorschubgeschwindigkeit herangezogenen verbesserten Wertes der unabhängigen Variablen verwendet wird, hängt die ermittelte Vorschubgeschwindigkeit nicht nur vom aktuell ermittelten Wert der unabhängigen Variablen ab, bei dem der aktuelle Korrelationskoeffizient seinen Maximalwert hat, sondern bei der zu ermittelnden Vorschubgeschwindigkeit werden auch vorhergehende Werte der unabhängigen Variablen herangezogen. Hierdurch wird die zu ermittelnde Vorschubgeschwindigkeit unabhängiger von Störgrößen, welche während der Bildaufnahmen auftreten. Durch den jeweiligen Wichtungsfaktor kann festgelegt werden, mit welchem Gewicht die vorhergehenden Werte der unabhängigen Variablen in die Berechnung der Vorschubgeschwindigkeit eingehen bzw. mit welchem Gewicht der aktuell ermittelte Wert der unabhängigen Variablen in die Berechnung der Vorschubgeschwindigkeit eingeht.

Besonders vorteilhaft ist es, wenn die Wichtungsfaktoren in Abhängigkeit des maximalen Wertes des Korrelationskoeffizienten gebildet werden. Ist der maximale Wert des Korrelationskoeffizienten groß, bedeutet dies in der Regel, dass keine oder nur geringe Störgrößen vorliegen. Daher kann der aktuell ermittelte Wert der unabhängigen Variablen mit einem großen Gewicht in die Berechnung der Vorschubgeschwindigkeit eingehen. Ist der maximale Wert des Korrelationskoeffizienten klein, deutet dies in der Regel darauf hin, dass bei der Ermittlung des Korrelationskoeffizienten Störungen aufgetreten sind, weshalb der aktuell ermittelte Wert der unabhängigen Variablen mit einem geringen Gewicht in die Berechnung der Vorschubgeschwindigkeit eingehen soll. Statt dessen geht dann der Schätzwert der unabhängigen Variablen mit einem größeren Gewicht in die Berechnung der Vorschubgeschwindigkeit ein.

Als besonders vorteilhaft hat es sich herausgestellt, die Wichtungsfaktoren so zu wählen, dass die Summe der Wichtungsfaktoren eins ist. Hierdurch kann eine nahezu lineare Verschiebung des Anteils, mit dem der aktuell ermittelte Wert der unabhängigen Variablen bei der Berechnung der Vorschubgeschwindigkeit berücksichtigt wird, auf den Anteil, mit dem der Schätzwert bei der Ermittlung der Vorschubgeschwindigkeit berücksichtigt wird, erfolgen.

Als sehr vorteilhaft hat sich eine Ausführungsform der Erfindung herausgestellt, bei der der Schätzwert sowie die Wichtungsfaktoren mittels eines rekursiven Filters gebildet werden. Durch die Verwendung eines rekursiven Filters lassen sich der Schätzwert sowie die Wichtungsfaktoren auf einfache Weise bilden. Da alle Parameter rekursiv neu berechnet werden, können sie sich zeitlich ändern. Deshalb kann das Verfahren auch für zeitvariante Systeme verwendet werden.

Besonders vorteilhaft ist es, wenn als rekursives Filter ein Kalmanfilter verwendet wird; denn ein Kalmanfilter hat als Eingangsgröße einen Messwert oder mehrere Messwerte und die zugehörige Messfehlervarianz bzw. Messfehlervarianzen. Mit Hilfe des Kalmanfilters kann ein Signalmodell erstellt werden, welches sich aus den Bewegungsgleichungen ableitet. So können die Geschwindigkeit und die Beschleunigung des Objektes und daraus die zurückgelegte Wegstrecke des Objektes ermittelt werden. Besonders vorteilhaft ist es, dass das erfindungsgemäße Verfahren auch bei zeitvarianten Vorgängen angewendet werden kann. Zudem ist eine einfache numerische Berechnung möglich.

Bei einer Anordnung zur Bestimmung der Vorschubgeschwindigkeit eines Objektes ist ein Bildaufnahmeelement vorhanden, mittels welchem ein Bild des Objektes rasterförmig erfassbar ist, ein erstes Element vorhanden, mittels welchem aus den vom Bildaufnahmeelement erfassten Bildern Bildprofile erstellbar sind, ein Korrelator vorhanden, welcher aus den Bildprofilen einen Korrelationskoeffizienten in Abhängigkeit einer unabhängigen Variablen bildet, ein zweites Element vorhanden, mittels welchem der Maximalwert des Korrelationskoeffizienten sowie der zum Maximalwert gehörige Messwert der unabhängigen Variablen bestimmbar ist, ein rekursives Filter vorhanden, mittels welchem ein statistischer Schätzwert der unabhängigen Variablen sowie Wichtungsfaktoren gebildet werden, und ein drittes Element vorhanden, mittels welchem aus dem Messwert und dem Schätzwert jeweils in Abhängigkeit eines der Wichtungsfaktoren ein verbesserter zum Maximalwert des Korrelationskoeffizienten gehöriger Wert bestimmt wird.

Dadurch, dass ein Bildaufnahmeelement vorhanden ist, mittels welchem ein Bild des Objektes rasterförmig erfassbar ist, lassen sich von den vom Bildaufnahmeelement erfassten Bildern auf einfache Weise Bildprofile erstellen. Mittels des Korrelators kann dann von den Bildprofilen ein Korrelationskoeffizient in Abhängigkeit einer unabhängigen Variablen gebildet werden. Durch das zweite Element lässt sich der Maximalwert des Korrelationskoeffizienten sowie der zum Maximalwert gehörige Messwert der unabhängigen Variablen bestimmen.

Dadurch, dass ein rekursives Filter vorhanden ist, mittels welchem ein statistischer Schätzwert der unabhängigen Variablen sowie Wichtungsfaktoren gebildet werden, können zur Bildung der Vorschubgeschwindigkeit vorhergehende unabhängige Variablen berücksichtigt werden. Durch das dritte Element, mittels welchem aus dem Messwert und dem Schätzwert jeweils in Abhängigkeit der Wichtungsfaktoren ein verbesserter zum Maximalwert des Korrelationskoeffizienten zugehöriger Wert bestimmt werden kann, wird in vorteilhafter Weise erreicht, dass bei der Berechnung der Vorschubgeschwindigkeit berücksichtigt werden kann, mit welchem Anteil der aktuell ermittelte Wert der unabhängigen Variablen bzw. der Schätzwert der unabhängigen Variablen berücksichtigt werden soll.

Da der Maximalwert des Korrelationskoeffizienten für die Wichtung des aktuell ermittelten Wertes der unabhängigen Variablen bzw. des Schätzwertes der unabhängigen Variablen von wesentlicher Bedeutung ist, ist bei einer weiteren Ausführungsform der Erfindung ein Element vorgesehen, mittels welchem eine Schätzfehlervarianz aus dem maximalen Korrelationskoeffizienten bestimmbar ist.

Besonders vorteilhaft ist auch eine Ausführungsform der Erfindung, bei der Verzögerungsglieder vorhanden sind, zur Bildung der rekursiven Schritte. Die Verzögerungsglieder haben starken Einfluss auf die Stabilität der Anordnung. Ohne Verzögerungsglieder bestünde die Gefahr, dass die Anordnung akausal werden würde.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigen:

Figur 1      den prinzipiellen Aufbau einer erfindungsgemäßen Anordnung als Blockschaltbild,

Figur 2      eine schematische Anordnung einer möglichen Verwendung der Erfindung,

Figur 3a      die Aufnahme eines Objekts zu einem ersten Zeitpunkt,

Figur 3b      eine Aufnahme des in Figur 3a dargestellten Objekts nach einem vorbestimmten zeitlichen Abstand,

Figur 4a      ein Bildprofil der in Figur 3a dargestellten Aufnahme,

Figur 4b      ein Bildprofil der in Figur 3b dargestellten Aufnahme und

Figur 5      einen möglichen Verlauf eines von den in den Figuren 4a und 4b dargestellten Bildprofilen gebildeten Korrelationskoeffizienten in Abhängigkeit einer unabhängigen Variablen.

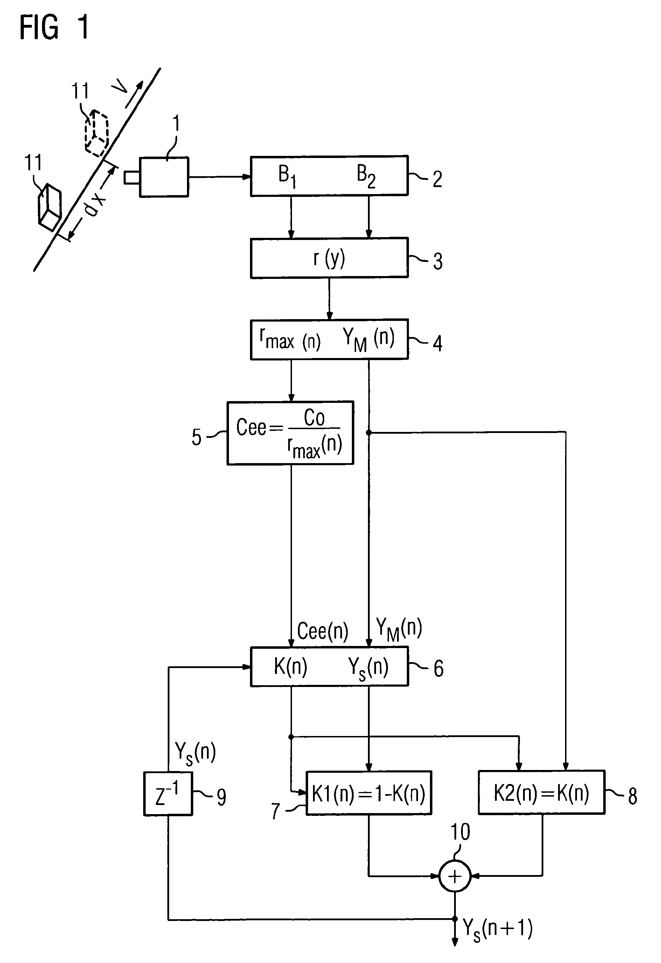

Wie Figur 1 entnommen werden kann, werden mittels eines Bildaufnahmeelements 1, welches als CCD-Sensor ausgebildet sein kann, Aufnahmen eines Objektes 11 gemacht. Das Objekt 11 bewegt sich mit einer konstanten Geschwindigkeit V. Die Aufnahmen werden in einem solchen zeitlichen Abstand dt voneinander gemacht, in dem sich das Objekt 11 um einen Weg dx fortbewegt hat. Durch Division des Weges dx durch den zeitlichen Abstand erhält man die Vorschubgeschwindigkeit V.

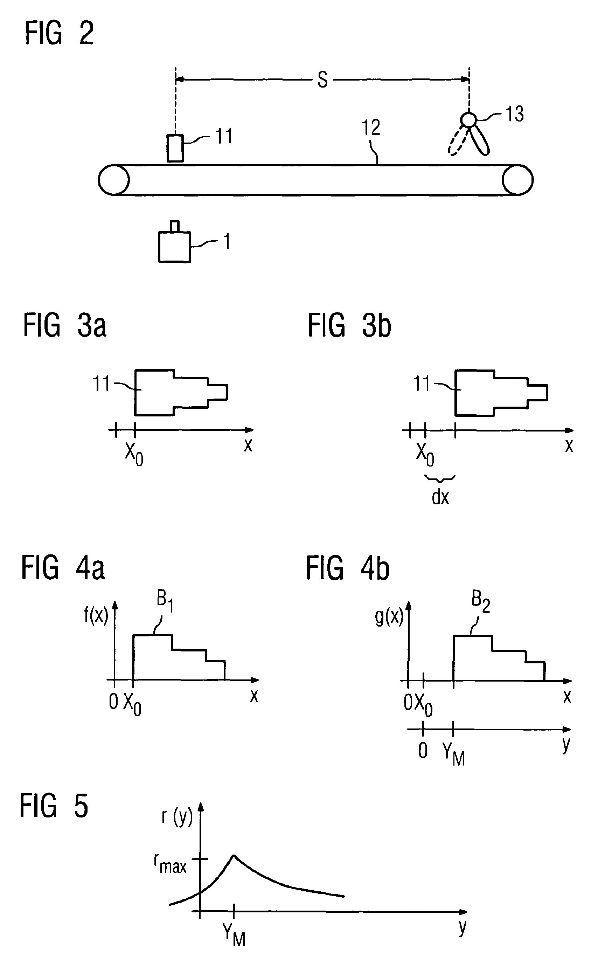

Wie Figur 2 entnommen werden kann, ist das Objekt 11 auf einem Transportband 12 angeordnet. In einem Abstand s von dem Ort, an dem sich das Objekt 11 zu dem Zeitpunkt befindet, zu dem mittels des Bildaufnahmeelements 1 die zweite Aufnahme gemacht worden ist, ist ein Auswerfer 13 angeordnet. Sofern das Objekt 11 mittels des Auswerfers 13 vom Transportband 12 entfernt werden soll, ist es erforderlich, die Vorschubgeschwindigkeit V des Objekts 11 genau zu kennen, um dadurch den genauen Zeitpunkt bestimmen zu können, zu dem sich das Objekt 11 vor dem Auswerfer 13 befindet.

Wie Figur 3a entnommen werden kann, befindet sich das Objekt 11 zum Zeitpunkt der ersten Aufnahme mit seiner linken Kante an einem Ort $X_0$. Zum Zeitpunkt der zweiten Aufnahme befindet sich das Objekt 11 um den Abstand dx von dem Ort $X_0$ versetzt. Dies ist in Figur 3b dargestellt.

Zur Bestimmung der Vorschubgeschwindigkeit werden zunächst in einem ersten Element 2 von der ersten Aufnahme ein erstes Bildprofil $B_1$ und von der in einem vorbestimmten zeitlichen Abstand dt nach dem Zeitpunkt der ersten Aufnahme gemachten zweiten Aufnahme ein zweites Bildprofil $B_2$ erstellt. Die erstellten Bildprofile $B_1$, $B_2$ sind in den Figuren 4a und 4b dargestellt. In den Bildprofilen ist die Summe der schwarzen Bildpunkte über den Weg x dargestellt.

Von den Bildprofilen $B_1$, $B_2$ wird in einem Korrelator 3 der Korrelationskoeffizient r(y) in Abhängigkeit einer unabhängigen Variablen y gebildet. Die Bildung des Korrelationskoeffizienten r(y) geschieht nach folgender Formel:

$$r(y) = \frac{\sum_{x=0}^{N} [(f(x) - M_f) \cdot (g(x+y) - M_g(y))]}{\sqrt{[\sum_{x=0}^{N} (f(x) - M_f)^2] \cdot [\sum_{x=0}^{N} (g(x+y) - M_g(y))^2]}}$$

wobei

$$M_f = \frac{1}{N} \sum_{x=0}^{N} f(x) \quad \text{und} \quad M_g(y) = \frac{1}{N} \sum_{x=0}^{N} g(x+y)$$

ist.

Die unabhängige Variable y hat am Ort $X_0$ ihren Nullpunkt. Hierdurch hat der Korrelationskoeffizient r(y) bei einem Wert $Y_M$ der unabhängigen Variablen y sein Maximum $r_{max}$, der dem zurückgelegten Weg dx des Objektes 11 während des vorbestimmten zeitlichen Abstands dt entspricht, da die Bildprofile $B_1$, $B_2$ bei diesem Wert deckungsgleich sind. Der Verlauf des Korrelationskoeffizienten r(y) ist in Figur 5 dargestellt.

In einem zweiten Element 4 wird der Maximalwert $r_{max}$ des Korrelationskoeffizienten r(y) sowie der zum Maximalwert $r_{max}$ gehörige Wert $Y_M$ der unabhängigen Variablen y bestimmt.

In einem Varianzelement 5 wird aus dem Maximalwert $r_{max}$ eine so genannte Schätzfehlervarianz Cee gebildet. Die Schätzfehlervarianz Cee sei proportional dem reziproken Wert des Maximalwerts $r_{max}$ des Korrelationskoeffizienten r(y). Der Proportionalitätsfaktor Co wird empirisch ermittelt. Er kann beispielsweise zwischen 0,1 und 1000 liegen.

Die Schätzfehlervarianz Cee sowie der zum ermittelten maximalen Korrelationskoeffizienten $r_{max}$ zugehörige Wert $Y_M$ der unabhängigen Variablen y werden auf ein rekursives Filter 6 gegeben. Das rekursive Filter ist als so genanntes Kalmanfilter ausgebildet.

Mittels des rekursiven Filters 6 werden aus der Schätzfehlervarianz Cee und dem zum Maximalwert $r_{max}$ zugehörigen Messwert $Y_M$ der unabhängigen Variablen y ein Wichtungsfaktor k, aus dem die Wichtungsfaktoren k1 und k2 gebildet werden, sowie ein Schätzwert $Y_S$ der unabhängigen Variablen y gebildet. Die Bildung geschieht nach folgenden Formeln:

Einführung einer Kovarianzmatrix:

$$C_{xx} = \begin{bmatrix} c_{11} & c_{12} \\ c_{21} & c_{22} \end{bmatrix}$$

und
Wichtungsfaktor Beschleunigung: $k_a$
Wichtungsfaktor Geschwindigkeit: $k_v$

$$k_a = \frac{P_1}{q}; \qquad k_v = \frac{P_2}{q}$$

mit:

$$P_1 = C_{11} \cdot (2n + 1) + C_{12}$$

$$P_2 = C_{21} \cdot (2n + 1) + C_{22}$$

$$q = P_1 \cdot (2n + 1) + P_2 + Cee$$

Schätzwert der Beschleunigung:

$$a_S (n + 1) = a_S(n) + k_a \cdot (Y_M(n) - Y_S(n)) \qquad (I)$$

Schätzwert der Geschwindigkeit:

$$v_S(n + 1) = v_S(n) + k_v \cdot (Y_M(n) - Y_S(n)) \qquad (II)$$

Der Vorschub berechnet sich zu:

$$Y_S(n + 1) = (2n + 1) \cdot a_S(n + 1) + v_S(n + 1) \qquad \text{(III)}$$

Durch Einsetzen von I und II in III erhält man:

$$Y_S(n + 1) = Y_S(n) + ((2n + 1) \cdot k_a + k_v) \cdot (Y_M(n) - Y_S(n))$$

Mit $(2n + 1) k_a + k_v = k$ erhält man:

$$Y_S(n + 1) = Y_S(n) \cdot (1\text{-}k) + Y_M(n) \cdot k$$

$$= Y_S(n) \cdot k1 + Y_M(n) \cdot k2$$

mit $k1 = (1\text{-}k)$ und $k2 = k$

Anfangswerte:

$$C_{11} = 1$$
$$C_{12} = 0$$
$$C_{21} = 0$$
$$C_{22} = 1$$
$$a_S(0) = O$$
$$v_S(0) = Y_M(0)$$
$$Y_S(0) = Y_M(0)$$

Bemerkung: Bei den hergeleiteten Formeln wurde zur Vereinfachung die Abtastzeit auf den Wert $T = 1$ normiert (entfällt somit). Hierdurch entfallen in vorteilhafter Weise viele zeitaufwendige Multiplikationen, was sich insbesondere bei der Berechnung auf einem Digitalrechner positiv bemerkbar macht. Die Abtastzeit der Bilder muss konstant sein.

$C_{xx}$ ist die so genannte Kovarianzmatrix. Sie enthält die Statistik der Schätzwerte.
Anschaulich: Schwanken die Schätzwerte stark, sind die Elemente von $C_{xx}$ groß. Dies bedeutet aber, dass auch $k$ groß ist. Daraus folgt, dass zur Schätzung die Messwerte $Y_M$ stärker gewichtet sind.

Wie den vorstehenden Formeln in Verbindung mit Figur 1 entnommen werden kann, bildet der Wert $Y_S(n+1)$, welcher durch Summation in einem Summationspunkt 10 eines in einem ersten Wichtungselement 7 gebildeten Produkts, welches aus dem vorherigen Schätzwert $Y_S(n)$ und einem ersten Wichtungsfaktor k1 gebildet wird, und eines in einem zweiten Wichtungselement 8 gebildeten Produkts, welches aus dem aktuellen Messwert $Y_M(n)$ und einem zweiten Wichtungsfaktor k2 gebildet wird, gewonnen wird, den verbesserten Wert der unabhängigen Variablen y, in dem der Korrelationskoeffizient r sein Maximum $r_{max}$ hat. Dieser Wert entspricht der Strecke dx, um die sich das Objekt 11 während des vorbestimmten zeitlichen Abstands dt fortbewegt hat. Teilt man den verbesserten Wert $Y_S(n+1)$ durch den vorbestimmten Zeitabstand dt, erhält man die Vorschubgeschwindigkeit V des Objekts 11.

Der verbesserte Wert $Y_S(n+1)$ wird auf das Kalmanfilter 6 zurückgeführt. Damit das System nicht akausal wird, ist in der Rückführstrecke ein Verzögerungsglied 9 angeordnet.

## Patentansprüche

1. Verfahren zur Bestimmung der Vorschubgeschwindigkeit (V) eines Objekts (11), bei welchem von dem Objekt (11) mittels eines Bildaufnahmeelements (1) zu einem bestimmten Zeitpunkt und in einem vorbestimmten zeitlichen Abstand (dt) nach dem Zeitpunkt, in dem es eine Strecke (dx) zurückgelegt hat, Bildaufnahmen gemacht werden, von den Aufnahmen jeweils ein Bildprofil ($B_1$, $B_2$) erstellt wird, von den Bildprofilen ($B_1$, $B_2$) der Korrelationskoeffizient (r(y)) gebildet wird, der maximale Korrelationskoeffizient ($r_{max}$) als auch ein zugehöriger Messwert ($Y_M$) der unabhängigen Variablen (y) bestimmt wird und ein statistischer Schätzwert ($Y_S$) der unabhängigen Variablen (y) gebildet wird, wobei aus dem Messwert ($Y_M$) in Abhängigkeit eines ersten Wichtungsfaktors (k1) sowie dem Schätzwert ($Y_S$) in Abhängigkeit eines zweiten Wichtungsfaktors (k2) ein verbesserter zugehöriger Wert ($Y_S(n+1)$) bestimmt wird und durch Division des verbesserten zugehörigen Wertes ($Y_S(n+1)$) durch den zeitlichen Abstand (dt) der Bildaufnahmen die Geschwindigkeit (V) bestimmt wird.

**2.** Verfahren nach Anspruch 1, **dadurch gekennzeichnet, dass** die Wichtungsfaktoren (k1, k2) in Abhängigkeit des maximalen Wertes des Korrelationskoeffizienten ($r_{max}$) gebildet werden.

**3.** Verfahren nach Anspruch 1 oder 2, **dadurch gekennzeichnet, dass** die Summe der Wichtungsfaktoren (k1, k2) eins ist.

**4.** Verfahren nach einem der Ansprüche 1 bis 3, **dadurch gekennzeichnet, dass** der Schätzwert ($Y_S$) sowie die Wichtungsfaktoren (k1, k2) mittels eines rekursiven Filters (6) gebildet werden.

**5.** Verfahren nach Anspruch 4, **dadurch gekennzeichnet, dass** das rekursive Filter (6) ein Kalmanfilter ist.

**6.** Verfahren nach Anspruch 4 oder 5, **dadurch gekennzeichnet, dass** die Schätzfehlervarianz (Cee) dem reziproken Wert des maximalen Korrelationskoeffizienten ($r_{max}$) proportional ist.

**7.** Anordnung zur Bestimmung der Vorschubgeschwindigkeit (V) eines Objektes (11), mit einem Bildaufnahmeelement (1), mittels welchem ein Bild des Objektes (11) rasterförmig erfassbar ist, einem ersten Element (2), mittels welchem aus den vom Bildaufnahmeelement (1) erfassten Bildern Bildprofile ($B_1$, $B_2$) erstellbar sind, einem Korrelator (3), welcher aus den Bildprofilen ($B_1$, $B_2$) einen Korrelationskoeffizienten (r(y)) in Abhängigkeit einer unabhängigen Variablen (y) bildet, einem zweiten Element (4), mittels welchem der Maximalwert ($r_{max}$) des Korrelationskoeffizienten (r(y)) sowie der zum Maximalwert ($r_{max}$) gehörige Messwert ($Y_M$) der unabhängigen Variablen (y) bestimmbar ist, einem rekursiven Filter (6), mittels welchem ein statistischer Schätzwert ($Y_S$) der unabhängigen Variablen (y) sowie Wichtungsfaktoren (k1, k2) gebildet werden, und einem dritten Element (10), mittels welchem aus dem Messwert ($Y_M$) und dem Schätzwert ($Y_S$) jeweils in Abhängigkeit eines der Wichtungsfaktoren (k1, k2) ein verbesserter zum Maximalwert ($r_{max}$) des Korrelationskoeffizienten gehöriger Wert ($Y_S(n+1)$) bestimmt wird.

**8.** Anordnung nach Anspruch 7, **dadurch gekennzeichnet, dass** ein Element (5) vorhanden ist, zur Bestimmung einer Schätzfehlervarianz (Cee) aus dem maximalen Korrelationskoeffizienten ($r_{max}$).

**9.** Anordnung nach Anspruch 7 oder 8, **dadurch gekennzeichnet, dass** Verzögerungsglieder (6a, 6b) vorhanden sind, zur Bildung der rekursiven Schritte.

**10.** Anordnung nach einem der Ansprüche 7 bis 9, **dadurch gekennzeichnet, dass** ein erstes Wichtungselement (7) vorhanden ist, zur Wichtung des Schätzwertes ($Y_S$), und ein zweites Wichtungselement (8) vorhanden ist, zur Wichtung des Messwertes ($Y_M$).

FIG 1

FIG 2

FIG 3a

FIG 3b

FIG 4a

FIG 4b

FIG 5